# EUROPEAN PATENT APPLICATION

(11) **EP 2 963 565 A1**
(43) Date of publication of application: **06.01.2016**
(21) Application number: 14200679.0
(22) Date of filing: 30.12.2014
(51) Int. Cl.: G06F 17/30

(54) **Method and apparatus for processing input information**

(30) Priority: 30.06.2014 CN 201410305837
(71) Applicant: Baidu Online Network Technology (Beijing) Co., Ltd, Beijing 100085 (CN)
(72) Inventor: Lui, Lin, Haidian District Beijing (CN); Wang, Fei, Haidian District Beijing (CN)
(74) Representative: Potter Clarkson LLP

(57) **Abstract**

Provided in the present invention is a method and apparatus for processing input information. In the embodiments of the present invention, by displaying an initial search interface and activating the initial search interface as a display area of an input keyword to display an input prompt, and then receiving an input keyword input by a user according to the input prompt, the input keyword may be displayed on the initial search interface, and a search instruction containing the input keyword is sent to a search engine for the search engine to perform retrieval according to the input keyword; since the display location of the input keyword is not particularly limited, a blank area of the initial search interface may be used to display the input keyword, thereby improving the space utilization of the initial search interface.

## Description

### [Technical field]

The present invention relates to retrieval techniques, and in particular to a method and apparatus for processing input information.

### [Background art]

A search engine is a system that collects information from the Internet according to a certain strategy using particular computer programs, provides a retrieval service for a user after organizing and processing the information, and displays user retrieval-relevant information to the user. According to a report of the China National Bureau of Statistics, the number of Chinese Internet users has exceeded 400 million, which data means that China has surpassed America to become the country with the largest number of Internet users in the world, and the total number of websites in China has exceeded 2 million. Therefore, the question of how to use a search service to satisfy user demand to the greatest extent possible is always an important topic for Internet companies.

An initial user interface of a search engine, i.e. an initial search interface, is the unique content that the user comes into contact with first, and is the primary channel for the first communication between the search engine and the user. In the prior art, the method of arranging an input box with a preset size in a specified space of the initial search interface is adopted for users to provide input keywords.

This method of arranging an input box with a preset size results in most of the space on the initial search interface outside the input box being a blank area, which cannot be used and is thus wasted. Although this form of input box has little impact on users using computers to surf the Internet to perform a search, with the rapid development of network technologies, more and more users use mobile terminals to surf the Internet, and generally, the screens of the mobile terminals are all relatively small; however, the users face a large amount of data input operations all the time, and if the input box form in the prior art is still used, the blank area outside the input box cannot be used, reducing the space utilization of the initial search interface and causing inconvenience to user operations, which will have a serious impact on the user experience.

### [Contents of the invention]

A method and apparatus for processing input information are provided in a plurality of aspects of the present invention, so as to improve the space utilization of an initial search interface.

A method for processing input information is provided in one aspect of the present invention, comprising:
displaying an initial search interface;
activating the initial search interface as a display area of an input keyword to display an input prompt;
receiving an input keyword input by a user according to the input prompt;
displaying the input keyword on the initial search interface; and
sending a search instruction containing the input keyword to a search engine for the search engine to perform retrieval according to the input keyword.

In the aspect as mentioned above and any possible implementation, further provided is an implementation, wherein the initial search interface comprises:
an interface with all space thereof being blank; or
an interface only containing the logo of a search engine; or
an interface only containing a search function button; or
an interface only containing the logo of the search engine and the search function button.

In the aspect as mentioned above and any possible implementation, further provided is an implementation which, after an initial search interface is displayed, and before the initial search interface is activated as a display area of an input keyword to display an input prompt, further comprises:
receiving an activation instruction triggered by the user to indicate input waiting.

In the aspect as mentioned above and any possible implementation, further provided is an implementation, wherein the input prompt comprises at least one of the following:
a cursor on the initial search interface;
a virtual keyboard; and
a voice input button.

In the aspect as mentioned above and any possible implementation, further provided is an implementation, wherein the step of sending a search instruction containing the input keyword to a search engine for the search engine to perform retrieval according to the input keyword comprises:
sending, according to a trigger instruction triggered by the user, the search instruction containing the input keyword to the search engine for the search engine to perform retrieval according to the input keyword; or
sending, according to the location change of the cursor on the initial search interface, the search instruction containing the input keyword before the cursor to the search engine for the search engine to perform retrieval according to the input keyword.

In the aspect as mentioned above and any possible implementation, further provided is an implementation, wherein the step of displaying an initial search interface and activating the initial search interface as a display area of an input keyword to display an input prompt comprises:
activating an initial search interface as a display area of an input keyword to display an input prompt while displaying the initial search interface; or
activating an initial search interface as a display area of an input keyword immediately after the initial search interface is displayed; or
activating, according to a preset activation rule, an initial search interface as a display area of an input keyword after the initial search interface is displayed.

An apparatus for processing input information is provided in another aspect of the present invention, comprising:
a display unit for displaying an initial search interface;
the display unit also being for activating the initial search interface as a display area of an input keyword to display an input prompt;
a reception unit for receiving an input keyword input by a user according to the input prompt;
the display unit also being for displaying the input keyword on the initial search interface; and
a sending unit for sending a search instruction containing the input keyword to a search engine for the search engine to perform retrieval according to the input keyword.

In the aspect as mentioned above and any possible implementation, further provided is an implementation, wherein the initial search interface comprises:
an interface with all space thereof being blank; or
an interface only containing the logo of a search engine; or
an interface only containing a search function button; or
an interface only containing the logo of the search engine and the search function button.

In the aspect as mentioned above and any possible implementation, further provided is an implementation, wherein the reception unit is also used for
receiving an activation instruction triggered by the user to indicate input waiting.

In the aspect as mentioned above and any possible implementation, further provided is an implementation, wherein the input prompt comprises at least one of the following:
a cursor on the initial search interface;
a virtual keyboard; and
a voice input button.

In the aspect as mentioned above and any possible implementation, further provided is an implementation, wherein the sending unit is specifically used for
sending, according to a trigger instruction triggered by the user, the search instruction containing the input keyword to the search engine for the search engine to perform retrieval according to the input keyword; or
sending, according to the location change of the cursor on the initial search interface, the search instruction containing the input keyword before the cursor to the search engine for the search engine to perform retrieval according to the input keyword.

In the aspect as mentioned above and any possible implementation, further provided is an implementation, wherein the display unit is specifically used for
activating an initial search interface as a display area of an input keyword to display an input prompt while displaying the initial search interface; or
activating an initial search interface as a display area of an input keyword immediately after the initial search interface is displayed; or
activating, according to a preset activation rule, an initial search interface as a display area of an input keyword after the initial search interface is displayed.

It may be seen from the above-mentioned technical solutions that in the embodiments of the present invention, by displaying an initial search interface and activating the initial search interface as a display area of an input keyword to display an input prompt, and then receiving an input keyword input by a user according to the input prompt, the input keyword may be displayed on the initial search interface, and a search instruction containing the input keyword is sent to a search engine for the search engine to perform retrieval according to the input keyword; since the display location of the input keyword is not particularly limited, a blank area of the initial search interface may be used to display the input keyword, thereby improving the space utilization of the initial search interface.

In addition, by means of the technical solutions provided in the present invention, since a visible input box is no longer deployed on the initial search interface, the display location of the input keyword is not particularly limited and the input keyword may be displayed in any location of the initial search interface; therefore, the display flexibility of the initial search interface may be effectively improved.

In addition, by means of the technical solutions provided in the present invention, since a visible input box is no longer deployed on the initial search interface, the first screen display of the input keyword is no longer limited to the size of the input box, and no longer can only be displayed in a single line; therefore, the display efficiency of the initial search interface may be effectively improved.

In addition, by means of the technical solutions provided in the present invention, since the input keyword need not be displayed in a specified location range of the initial search interface, i.e. a visible input box, the blank area of the initial search interface may be used to display the input keyword; therefore, the space utilization of the initial search interface may be further improved.

### [Description of the accompanying drawings]

In order to illustrate the technical solutions in the embodiments of the present invention more clearly, the accompanying drawings required to be used in the description of the embodiments or the prior art are briefly introduced below. Obviously, the accompanying drawings in the following description are some embodiments of the present invention, and those of ordinary skill in the art may further obtain other drawings according to these accompanying drawings without making inventive efforts.

Fig. 1 is a schematic flowchart of a method for processing input information provided in an embodiment of the present invention;

Figs. 2-9 are schematic displaying diagrams of an initial search interface in the embodiment corresponding to Fig. 1; and

Fig. 10 is a schematic structural diagram of an apparatus for processing input information provided in another embodiment of the present invention.

### [Detailed description of the embodiments]

In order to make the objectives, technical solutions and advantages of the embodiments of the present invention more clear, the technical solutions in the embodiments of the present invention will be described clearly and completely below in combination with the accompanying drawings in the embodiments of the present invention. Obviously, the embodiments described are some of the embodiments of the present invention rather than all the embodiments. All other embodiments obtained by those of ordinary skill in the art based on the embodiments in the present invention without making inventive efforts are within the scope of protection of the present invention.

It should be noted that the terminals involved in the embodiments of the present invention may comprise but are not limited to a mobile phone, a personal digital assistant (PDA), a wireless handheld apparatus, a wireless netbook, a personal computer, a portable computer, an MP3 player, an MP4 player, etc.

In addition, the term "and/or" herein is merely an association relationship describing associated objects, and indicates that three relationships may exist, for example, A and/or B may represent: three cases where A exists alone, A and B exist simultaneously, and B exists alone. In addition, the character "/" herein generally indicates an "or" relationship between associated objects.

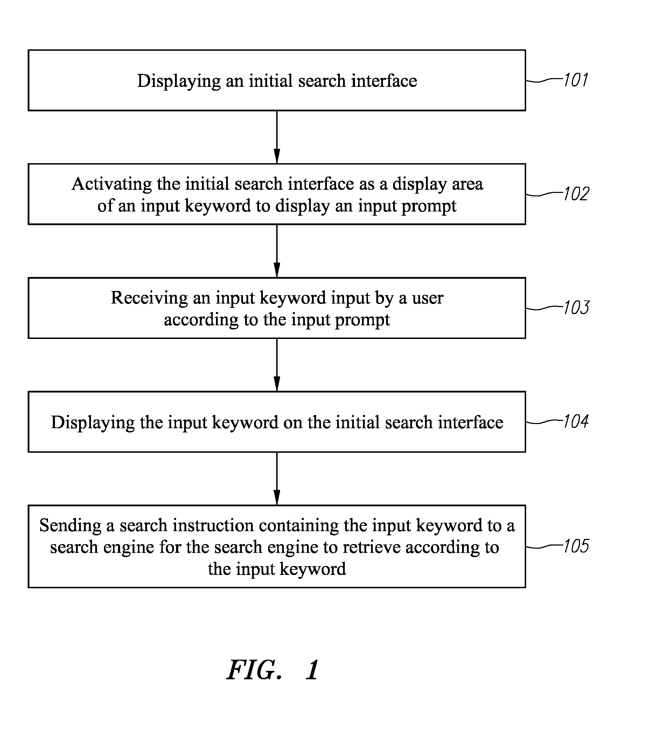

Fig. 1 is a schematic flowchart of a method for processing input information provided in an embodiment of the present invention, as shown in Fig. 1.
101. An initial search interface is displayed.
102. The initial search interface is activated as a display area of an input keyword to display an input prompt.
103. An input keyword input by a user according to the input prompt is obtained.

The input keyword may be Chinese-language information, or may also be foreign-language information, such as English-language information and German-language information; this is not particularly limited in this embodiment.
104. The input keyword is displayed on the initial search interface.
105. A search instruction containing the input keyword is sent to a search engine for the search engine to perform retrieval according to the input keyword.

It should be noted that the execution body of 101-105 may be the search engine, may be located in a local application (App), or may also be located in a network-side server; this is not particularly limited in this embodiment.

It may be understood that the application may be a native application program (nativeAPP) installed in a terminal, or may also be a webpage application program (webAPP) of a browser in the terminal; it may take any objective form capable of implementing the information retrieval to provide a search result, and this is not limited in this embodiment.

In this way, by displaying an initial search interface and activating the initial search interface as a display area of an input keyword to display an input prompt, and then receiving an input keyword input by a user according to the input prompt, the input keyword may be displayed on the initial search interface, and a search instruction containing the input keyword is sent to a search engine for the search engine to perform retrieval according to the input keyword; since the display location of the input keyword is not particularly limited, a blank area of the initial search interface may be used to display the input keyword, thereby improving the space utilization of the initial search interface.

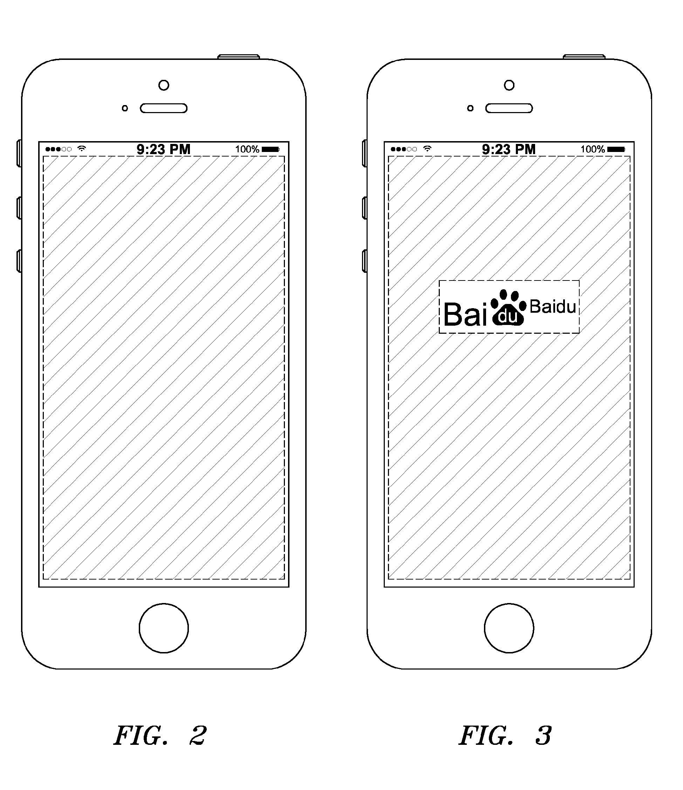

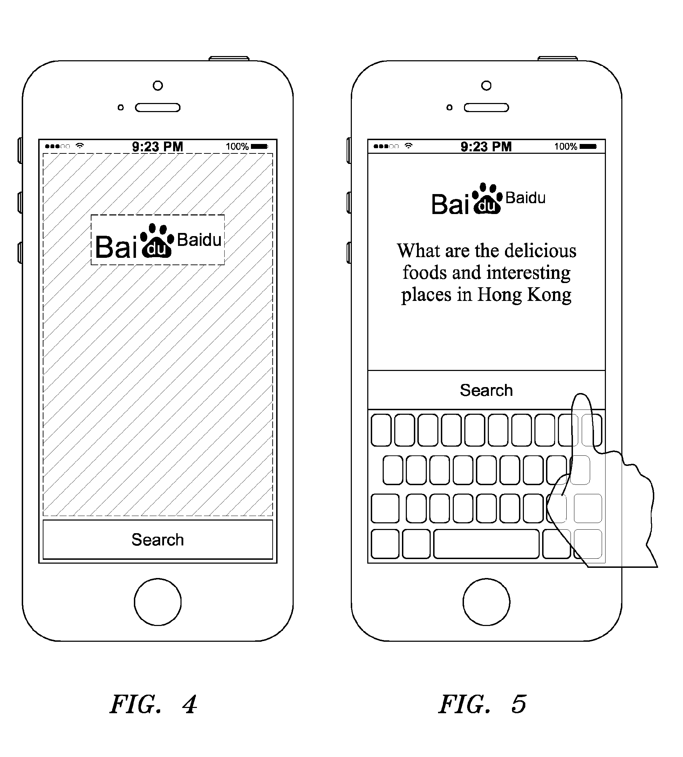

Optionally, in a possible implementation of this embodiment, in 101, the initial search interface displayed by a search apparatus may comprise but is not limited to:
an interface with all space thereof being blank, as shown in Fig. 2; or
an interface only containing the logo of a search engine, as shown in Fig. 3; or
an interface only containing a search function button; or
an interface only containing the logo of the search engine and the search function button, as shown in Fig. 4.

In this way, since a visible input box is no longer displayed on the initial search interface, the display location of the input keyword is not particularly limited, and a blank area of the initial search interface may be used to display the input keyword, thereby improving the space utilization of the initial search interface. That is to say, the input keyword may be displayed in any location of the initial search interface; meanwhile, the display flexibility of the initial search interface may be further improved.

In addition, since a visible input box is no longer displayed on the initial search interface, the blank area of the entire initial search page may be a display area of the input keyword; therefore, the first screen display of the input keyword is no longer limited to the size of the input box, and no longer can only be displayed in a single line, but may be displayed in multiple lines.

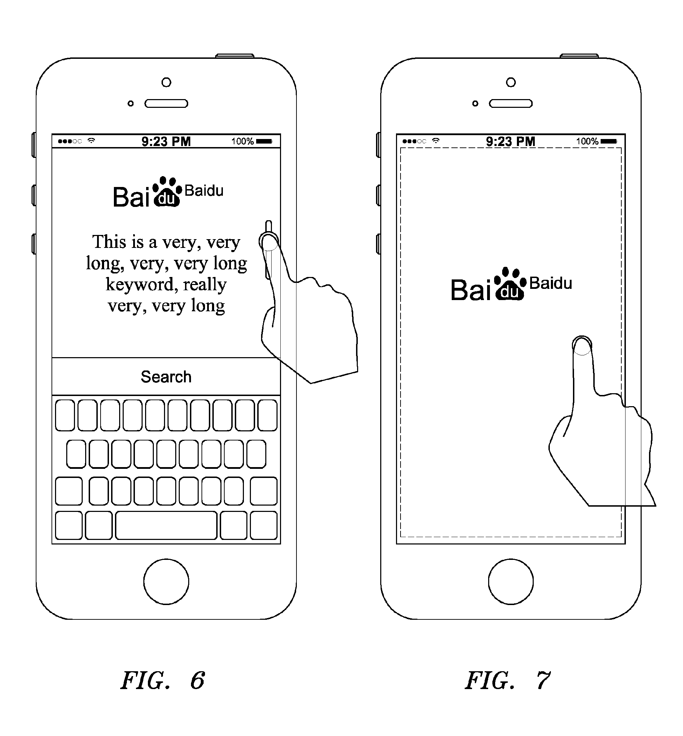

It may be understood that if there are too many characters in the input keyword which needs to be input by the user, the search apparatus may execute an automatic line feed operation according to a preset threshold value of the number of characters displayed in each line, so as to continue to display the input keyword in the next line, as shown in Fig. 5. If the display area specified in the initial search interface cannot completely display all the input keywords in one screen, the search apparatus may provide a scroll bar in the initial search interface, so that the user drags the scroll bar to perform scrolling display to match the display area, as shown in Fig. 6. The size of one screen refers to the size of a display area. Therefore, the display efficiency of the initial search interface may be effectively improved.

Optionally, in a possible implementation of this embodiment, the search apparatus may execute 101 and 102 simultaneously, or may execute 102 immediately after 101 is executed, or may also execute 102 according to a preset activation rule after 101 is executed; this is not particularly limited in this embodiment.

Specifically, after 101, the search apparatus may also further receive an activation instruction triggered by the user to indicate input waiting, and then execute 102. The activation instruction may take various forms, which are not particularly limited in this embodiment. For example, the user clicks or touches any area on the initial search interface, as shown in Fig. 7, or as another example, the user shakes the terminal and so on, such that the search apparatus may execute 102 according to the received activation instruction so as to prompt the user that information input may be performed. Since the click or touch operation may be executed in any area on the initial search interface to trigger an activation instruction, rather than having to be executed in a specified area, such as an area within the input box in the prior art, the efficiency of information input activation may be effectively improved.

It may be understood that, since a visible input box is no longer deployed on the initial search interface, activating the initial search interface as a display area means that the input area is no longer limited to the visible input box but is extended to an invisible input box, i.e. other areas of the initial search interface.

Optionally, in a possible implementation of this embodiment, in 102, if the initial search interface is an interface with all space thereof being blank, then the entire initial search interface may be specifically activated as a display area of the input keyword.

Specifically, if the initial search interface is an interface with all space thereof being blank, then an input box may be specifically provided on the initial search interface, wherein the size of the input box is the same as the size of the entire initial search interface, and the transparency thereof may be 100%, completely transparent, i.e. invisible. For example, in Fig. 2, the shaded area surrounded by the dot-and-dash lines is a completely transparent input box.

Optionally, in a possible implementation of this embodiment, in 102, if the initial search interface is not an interface with all space thereof being blank but comprises other interface elements, such as the logo of a search engine and a search function button, then the blank area of the initial search interface may be specifically activated as a display area of the input keyword.

Specifically, if the initial search interface is not an interface with all space thereof being blank but comprises other interface elements, then an input box may be specifically provided on the initial search interface, wherein the size of the input box depends on the interface elements contained in the initial search interface, and the transparency thereof may be 100%, completely transparent, i.e. invisible. For example, as shown in Figs. 3 and 4, the shaded areas surrounded by the dot-and-dash lines are completely transparent input boxes.

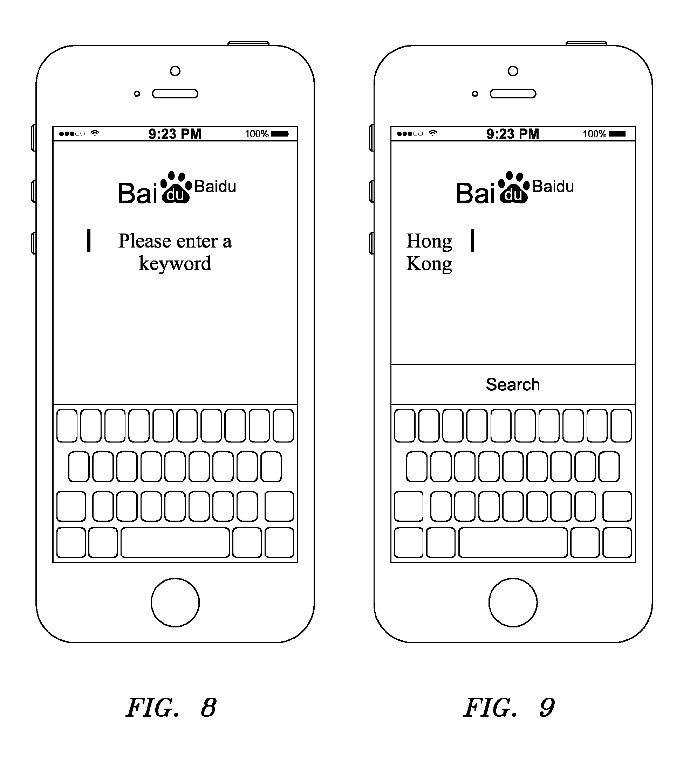

Optionally, in a possible implementation of this embodiment, in 102, the input prompt displayed by the search apparatus may comprise but is not limited to at least one of the following:
a cursor on the initial search interface, as shown in Fig. 8;
a virtual keyboard, as shown in Fig. 8; and
a voice input button.

Specifically, the virtual keyboard or the voice input button may be located in a location facilitating user operations, such as at the bottom of the initial search interface, or on the right of the initial search interface; this is not particularly limited in this embodiment.

It may be understood that the input methods involved in this embodiment may comprise but are not limited to at least one of text input and voice input; this is not particularly limited in this embodiment.

Specifically, the step of executing a voice input search may be as follows: firstly, starting a voice input mode in a terminal, and receiving a voice signal input by a user; and then using the voice signal to find a match in a voice library. If the matching of the voice signal is successful, then one or more matching results are output; and when a plurality of matching results are output, one matching result may be determined according to the selection of the user. The above-mentioned matching result is displayed on the terminal, and the matching result is used to execute a search operation. If the matching of the voice signal fails, then error prompt information may be output.

Furthermore, the search apparatus may further play specified audio data, such as a "ticking" sound, so as to provide a further indication of input waiting.

It should be noted that the search apparatus may specifically adjust the attributes, i.e. visible or not (hidden or not), location, size or transparency and so on, of the content contained in the initial search interface according to a current display demand of the initial search interface, such as the logo of the search engine and the search function button.

For example, the search apparatus may adjust the search function button contained in the initial search interface to be invisible according to the display demand of displaying the initial search interface. For example, before the user starts inputting, the search apparatus adjusts the search function button contained in the initial search interface to be invisible.

Alternatively, for example, the search apparatus may adjust the location of the logo of the search engine contained in the initial search interface to be in the center of the screen of the terminal according to the display demand of displaying the initial search interface, so as to provide a more conspicuous logo of the search engine.

Alternatively, as another example, the search apparatus may adjust the size of the logo of the search engine contained in the initial search interface to become larger according to the display demand of displaying the initial search interface, so as to provide a more conspicuous logo of the search engine.

Alternatively, as another example, the search apparatus may adjust the search function button contained in the initial search interface to be visible according to the display demand of displaying the input keyword. For example, when or after the user starts inputting, the search apparatus adjusts the search function button contained in the initial search interface to be visible, as shown in Fig. 9.

Alternatively, as another example, the search apparatus may also adjust the location of the logo of the search engine contained in the initial search interface to be in a high position on the screen of the terminal according to the display demand of displaying the input keyword, so as to provide a larger input space.

Alternatively, as another example, the search apparatus may also adjust the size of the logo of the search engine contained in the initial search interface to become smaller according to the display demand of displaying the input keyword, so as to provide a larger input space.

Alternatively, as another example, the search apparatus may also adjust the logo of the search engine contained in the initial search interface to be invisible according to the display demand of displaying the input keyword. For example, when or after the user starts inputting, the search apparatus adjusts the logo of the search engine contained in the initial search interface to be gradually invisible or instantaneously invisible; this is not particularly limited in this embodiment.

Alternatively, as another example, the search apparatus may also adjust the transparency of the logo of the search engine contained in the initial search interface according to the display demand of displaying the input keyword. For example, when or after the user starts inputting, the search apparatus adjusts the transparency of the logo of the search engine contained in the initial search interface to be 50%, that is, uses the logo of the search engine as a watermark of the initial search interface.

Optionally, in a possible implementation of this embodiment, in 105, the search apparatus may specifically send, according to a trigger instruction triggered by the user, a search instruction containing the input keyword to the search engine for the search engine to perform retrieval according to the input keyword. Specifically, the search apparatus may specifically receive the trigger instruction triggered by the user, for example, the user clicks or touches the search function button on the initial search interface, or as another example, the user clicks or touches an OK function button displayed on an input interface, or as another example, the user shakes the terminal, or as another example, the user draws a specified gesture on the screen of the terminal. In this way, the search apparatus may execute subsequent operations according to the received trigger instruction.

Optionally, in a possible implementation of this embodiment, in 105, the search apparatus may specifically send, according to the location change of the cursor on the initial search interface, a search instruction containing the input keyword before the cursor to the search engine for the search engine to perform retrieval according to the input keyword. Specifically, the search apparatus may specifically detect the location change of the cursor on the initial search interface, and if the location changes, the input keyword before the cursor may be taken as a currently searched target keyword.

Optionally, in a possible implementation of this embodiment, after 104 and before 105, the search apparatus may further display associational keywords associated with the input keyword on the initial search interface for the user to select, so as to replace the input keyword.

For example, the search apparatus obtains the associational keywords associated with the input keyword according to the input keyword.

Alternatively, as another example, the search apparatus sends an associational instruction containing the input keyword to the search engine, so as to enable the search engine to obtain the associational keywords associated with the input keyword according to the input keyword.

The associational keywords are some associational information associated with the input keyword. For example, associational information associated with the linguistic meaning of the input keyword, such as that containing the input keyword, may be provided. Alternatively, as another example, associational information having the same meaning as that of the input keyword or a similar meaning to that of the input keyword may also be provided. Alternatively, as another example, associational information associated with the specification of the input keyword, such as that associated with service provider subscription information, i.e. promotion information, may be provided. This is not particularly defined in this embodiment.

In this embodiment, by displaying an initial search interface and activating the initial search interface as a display area of an input keyword to display an input prompt, and then receiving an input keyword input by a user according to the input prompt, the input keyword may be displayed on the initial search interface, and a search instruction containing the input keyword is sent to a search engine for the search engine to perform retrieval according to the input keyword; since the display location of the input keyword is not particularly limited, a blank area of the initial search interface may be used to display the input keyword, thereby improving the space utilization of the initial search interface.

In addition, by means of the technical solutions provided in the present invention, since a visible input box is no longer deployed on the initial search interface, the display location of the input keyword is not particularly limited and may be displayed in any location of the initial search interface; therefore, the display flexibility of the initial search interface may be effectively improved.

In addition, by means of the technical solutions provided in the present invention, since a visible input box is no longer deployed on the initial search interface, the first screen display of the input keyword is no longer limited to the size of the input box, and no longer can only be displayed in a single line; therefore, the display efficiency of the initial search interface may be effectively improved.

In addition, by means of the technical solutions provided in the present invention, since the input keyword need not be displayed in a specified location range of the initial search interface, i.e. a visible input box, the blank area of the initial search interface may be used to display the input keyword; therefore, the space utilization of the initial search interface may be further improved.

It shall be noted that, regarding the foregoing method embodiments, for the sake of simple description, the methods are described as a series of action combinations, but those of ordinary skill in the art shall know that, the present invention is not limited to the action sequence described, because according to the present invention, some steps may be performed in other sequences or performed simultaneously. Secondly, those skilled in the art shall also know that the embodiments described in the description are all preferred embodiments, and the actions and modules involved are not necessarily required in the present invention.

In the embodiments above, the description of each embodiment has its own emphasis, and for a part that is not detailed in a certain embodiment, reference may be made to the relevant description of other embodiments.

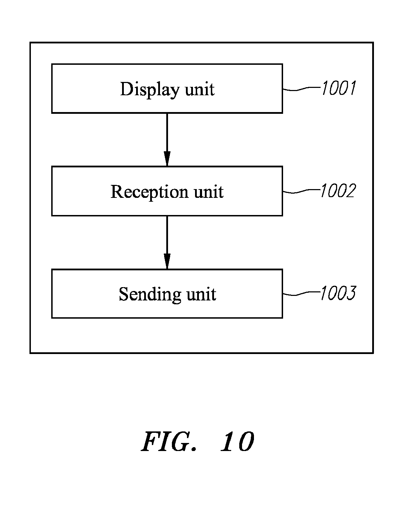

Fig. 10 is a schematic structural diagram of an apparatus for processing input information provided in another embodiment of the present invention, as shown in Fig. 10. The apparatus for processing input information in this embodiment may comprise a display unit 1001, a reception unit 1002 and a sending unit 1003. The display unit 1001 is used for displaying an initial search interface; the display unit 1001 is also used for activating the initial search interface as a display area of an input keyword to display an input prompt; the reception unit 1002 is used for receiving an input keyword input by a user according to the input prompt; the display unit 1001 is also used for displaying the input keyword on the initial search interface; and the sending unit 1003 is used for sending a search instruction containing the input keyword to a search engine for the search engine to perform retrieval according to the input keyword.

The input keyword may be Chinese-language information, or may also be foreign-language information, such as English-language information and German-language information; this is not particularly limited in this embodiment.

It should be noted that the apparatus for processing input information provided in this embodiment may be a search apparatus, may be an application (App) located locally, or may also be located in a network-side server; this is not particularly limited in this embodiment.

It may be understood that the application may be a native application program (nativeAPP) installed in a terminal, or may also be a webpage application program (webAPP) of a browser in the terminal; it may take any objective form capable of implementing the information retrieval to provide a search result, and this is not limited in this embodiment.

In this way, by way of the display unit displaying an initial search interface and activating the initial search interface as a display area of an input keyword to display an input prompt, and then the reception unit receiving an input keyword input by a user according to the input prompt, the input keyword may be displayed on the initial search interface, and the sending unit sends a search instruction containing the input keyword to a search engine for the search engine to perform retrieval according to the input keyword; since the display location of the input keyword is not particularly limited, a blank area of the initial search interface may be used to display the input keyword, thereby improving the space utilization of the initial search interface.

Optionally, in a possible implementation of this embodiment, the initial search interface displayed by the display unit may comprise but is not limited to:
an interface with all space thereof being blank, as shown in Fig. 2; or
an interface only containing the logo of a search engine, as shown in Fig. 3; or
an interface only containing a search function button; or
an interface only containing the logo of the search engine and the search function button, as shown in Fig. 4.

In this way, since a visible input box is no longer deployed on the initial search interface, the display location of the input keyword is not particularly limited, and a blank area of the initial search interface may be used to display the input keyword, thereby improving the space utilization of the initial search interface. That is to say, the input keyword may be displayed in any location of the initial search interface; meanwhile, the display flexibility of the initial search interface may be further improved.

In addition, since a visible input box is no longer deployed on the initial search interface, the blank area of the entire initial search interface may be a display area of the input keyword; therefore, the first screen display of the input keyword is no longer limited to the size of the input box, and no longer can only be displayed in a single line, but may be displayed in multiple lines.

It may be understood that if there are too many characters in the input keyword which needs to be input by the user, the search apparatus may execute an automatic line feed operation according to a preset threshold value of the number of characters displayed in each line, so as to continue to display the input keyword in the next line, as shown in Fig. 5. If the display area specified in the initial search interface cannot completely display all the input keywords in one screen, the search apparatus may provide a scroll bar in the initial search interface, so that the user drags the scroll bar to perform scrolling display to match the display area, as shown in Fig. 6. The size of one screen refers to the size of a display area. Therefore, the display efficiency of the initial search interface may be effectively improved.

Optionally, in a possible implementation of this embodiment, the display unit 1001 may execute the operation of activating an initial search interface as a display area of an input keyword to display an input prompt while executing the operation of displaying the initial search interface, or may also execute the operation of activating an initial search interface as a display area of an input keyword to display an input prompt immediately after the operation of displaying the initial search interface is executed, or may also execute the operation of activating an initial search interface as a display area of an input keyword according to a preset activation rule after the operation of displaying the initial search interface is executed; this is not particularly limited in this embodiment.

Specifically, after the display unit 1001 executes the operation of displaying the initial search interface, an activation instruction triggered by the user may be further received in the reception unit 1002 to indicate input waiting, and then the operation of activating the initial search interface as a display area of an input keyword to display an input prompt is executed. The activation instruction may take various forms, which are not particularly limited in this embodiment. For example, the user clicks or touches any area on the initial search interface, as shown in Fig. 7, or as another example, the user shakes the terminal and so on, such that the display unit 1001 may execute the operation of activating the initial search interface as a display area of an input keyword to display an input prompt according to the received activation instruction so as to prompt the user that information input may be performed. Since the click or touch operation may be executed in any area on the initial search interface to trigger an activation instruction, rather than having to be executed in a specified area, such as an area within the input box in the prior art, the efficiency of information input activation may be effectively improved.

It may be understood that, since a visible input box is no longer deployed on the initial search interface, activating the initial search interface as a display area means that the input area is no longer limited to the visible input box but is extended to an invisible input box, i.e. other areas of the initial search interface.

Optionally, in a possible implementation of this embodiment, if the initial search interface is an interface with all space thereof being blank, then the display unit 1001 may specifically activate the entire initial search interface as a display area of the input keyword.

Specifically, if the initial search interface is an interface with all space thereof being blank, then an input box may be specifically provided on the initial search interface, wherein the size of the input box is the same as the size of the entire initial search interface, and the transparency thereof may be 100%, completely transparent, i.e. invisible. For example, in Fig. 2, the shaded area surrounded by the dot-and-dash lines is a completely transparent input box.

Optionally, in a possible implementation of this embodiment, if the initial search interface is not an interface with all space thereof being blank but comprises other interface elements, such as the logo of a search engine and a search function button, then the display unit 1001 may specifically activate the blank area of the initial search interface as a display area of the input keyword.

Specifically, if the initial search interface is not an interface with all space thereof being blank but comprises other interface elements, then an input box may be specifically provided on the initial search interface, wherein the size of the input box depends on the interface elements contained in the initial search interface, and the transparency thereof may be 100%, completely transparent, i.e. invisible. For example, as shown in Figs. 3 and 4, the shaded areas surrounded by the dot-and-dash lines are completely transparent input boxes.

Optionally, in a possible implementation of this embodiment, the input prompt displayed by the display unit 1001 may comprise but is not limited to at least one of the following:
a cursor on the initial search interface, as shown in Fig. 8;
a virtual keyboard, as shown in Fig. 8; and
a voice input button.

Specifically, the virtual keyboard or the voice input button may be located in a location facilitating user operations, such as at the bottom of the initial search interface, or on the right of the initial search interface; this is not particularly limited in this embodiment.

It may be understood that the input methods involved in this embodiment may comprise but are not limited to at least one of text input and voice input; this is not particularly limited in this embodiment.

Specifically, the step of executing a voice input search may be as follows: firstly, starting a voice input mode in a terminal, and receiving a voice signal input by a user; and then using the voice signal to find a match in a voice library. If the matching of the voice signal is successful, then one or more matching results are output; and when a plurality of matching results are output, one matching result may be determined according to the selection of the user. The above-mentioned matching result is displayed on the terminal, and the matching result is used to execute a search operation. If the matching of the voice signal fails, then error prompt information may be output.

Furthermore, the search apparatus may further play specified audio data, such as a "ticking" sound, so as to provide a further indication of input waiting.

It should be noted that the search apparatus may specifically adjust the attributes, i.e. visible or not (hidden or not), location, size or transparency and so on, of the content contained in the initial search interface according to a current display demand of the initial search interface, such as the logo of the search engine and the search function button.

For example, the search apparatus may adjust the search function button contained in the initial search interface to be invisible according to the display demand of displaying the initial search interface. For example, before the user starts inputting, the search apparatus adjusts the search function button contained in the initial search interface to be invisible.

Alternatively, as another example, the search apparatus may adjust the location of the logo of the search engine contained in the initial search interface to be in the center of the screen of the terminal according to the display demand of displaying the initial search interface, so as to provide a more conspicuous logo of the search engine.

Alternatively, as another example, the search apparatus may adjust the size of the logo of the search engine contained in the initial search interface to become larger according to the display demand of displaying the initial search interface, so as to provide a more conspicuous logo of the search engine.

Alternatively, as another example, the search apparatus may adjust the search function button contained in the initial search interface to be visible according to the display demand of displaying the input keyword. For example, when or after the user starts inputting, the search apparatus adjusts the search function button contained in the initial search interface to be visible, as shown in Fig. 9.

Alternatively, as another example, the search apparatus may also adjust the location of the logo of the search engine contained in the initial search interface to be in a high position on the screen of the terminal according to the display demand of displaying the input keyword, so as to provide a larger input space.

Alternatively, as another example, the search apparatus may also adjust the size of the logo of the search engine contained in the initial search interface to become smaller according to the display demand of displaying the input keyword, so as to provide a larger input space.

Alternatively, as another example, the search apparatus may also adjust the logo of the search engine contained in the initial search interface to be invisible according to the display demand of displaying the input keyword. For example, when or after the user starts inputting, the search apparatus adjusts the logo of the search engine contained in the initial search interface to be gradually invisible or instantaneously invisible; this is not particularly limited in this embodiment.

Alternatively, as another example, the search apparatus may also adjust the transparency of the logo of the search engine contained in the initial search interface according to the display demand of displaying the input keyword. For example, when or after the user starts inputting, the search apparatus adjusts the transparency of the logo of the search engine contained in the initial search interface to be 50%, that is, uses the logo of the search engine as a watermark of the initial search interface.

Optionally, in a possible implementation of this embodiment, the sending unit 1003 is specifically used for sending, according to a trigger instruction triggered by the user, the search instruction containing the input keyword to the search engine for the search engine to perform retrieval according to the input keyword. Specifically, the reception unit 1002 may specifically receive the trigger instruction triggered by the user, and the trigger instruction may take various forms, which are not particularly limited in this embodiment. For example, the user clicks or touches the search function button on the initial search interface, or as another example, the user clicks or touches an OK function button displayed on an input interface, or as another example, the user shakes the terminal, or as another example, the user draws a specified gesture on the screen of the terminal. In this way, the sending unit 1003 may execute subsequent operations according to the trigger instruction received by the reception unit 1002.

Optionally, in a possible implementation of this embodiment, the sending unit 1003 is specifically used for sending, according to the location change of the cursor on the initial search interface, the search instruction containing the input keyword before the cursor to the search engine for the search engine to perform retrieval according to the input keyword. Specifically, the search apparatus may specifically detect the location change of the cursor on the initial search interface, and if the location changes, the input keyword before the cursor may be taken as a currently searched target keyword.

Optionally, in a possible implementation of this embodiment, the search apparatus may further display associational keywords associated with the input keyword on the initial search interface for the user to select, so as to replace the input keyword.

For example, the search apparatus obtains the associational keywords associated with the input keyword according to the input keyword.

Alternatively, as another example, the search apparatus sends an associational instruction containing the input keyword to the search engine, so as to enable the search engine to obtain the associational keywords associated with the input keyword according to the input keyword.

The associational keywords are some associational information associated with the input keyword. For example, associational information associated with the linguistic meaning of the input keyword, such as that containing the input keyword, may be provided. Alternatively, as another example, associational information having the same meaning as that of the input keyword or a similar meaning to that of the input keyword may also be provided. Alternatively, as another example, associational information associated with the specification of the input keyword, such as that associated with service provider subscription information, i.e. promotion information, may be provided. This is not particularly defined in this embodiment.

In this embodiment, by way of the display unit displaying an initial search interface and activating the initial search interface as a display area of an input keyword to display an input prompt, and then the reception unit receiving an input keyword input by a user according to the input prompt, the input keyword may be displayed on the initial search interface, and the sending unit sends a search instruction containing the input keyword to a search engine for the search engine to perform retrieval according to the input keyword; since the display location of the input keyword is not particularly limited, a blank area of the initial search interface may be used to display the input keyword, thereby improving the space utilization of the initial search interface.

In addition, by means of the technical solutions provided in the present invention, since a visible input box is no longer displayed on the initial search interface, the display location of the input keyword is not particularly limited and may be displayed in any location of the initial search interface; therefore, the display flexibility of the initial search interface may be effectively improved.

In addition, by means of the technical solutions provided in the present invention, since a visible input box is no longer displayed on the initial search interface, the first screen display of the input keyword is no longer limited to the size of the input box, and no longer can only be displayed in a single line; therefore, the display efficiency of the initial search interface may be effectively improved.

In addition, by means of the technical solutions provided in the present invention, since the input keyword need not be displayed in a specified location range of the initial search interface, i.e. a visible input box, the blank area of the initial search interface may be used to display the input keyword; therefore, the space utilization of the initial search interface may be further improved.

Those of ordinary skill in the art may clearly understand that, for convenience and brevity of description, information about the specific operation processes of the above systems, apparatuses, and units may be found by referring to the corresponding processes in the method embodiments, which will not be described here.

In a few embodiments provided in the present invention, it shall be understood that the disclosed systems, apparatuses and methods may be implemented in other ways. For example, the apparatus embodiments described above are merely illustrative, for example, the division of the units is merely a logical function division, and there may be other ways of dividing the units in actual implementation, for example, a plurality of units or components may be combined or may be integrated into another system, or some features may be omitted, or not carried out. Another point is that the coupling or direct coupling or communication connection shown or discussed may be an indirect coupling or a communication connection via some interfaces, apparatuses, or units, and may be electrical, mechanical, or in other forms.

The units described as separated components may or may not be physically separated, and components displayed as units may or may not be physical units, that is, may be located in one location, or may also be distributed on a plurality of network elements. Some or all of the units may be selected according to actual needs to achieve the objectives of the solutions of the present embodiments.

In addition, various functional units in various embodiments of the present invention may be integrated into one processing unit, or each of the units may also exist alone physically, or two or more units may be integrated into one unit. The integrated unit above may be implemented in the form of hardware or may also be implemented in the form of hardware with software functional units.

The integrated unit above implemented in the form of software functional units may be stored in a computer readable storage medium. The above-mentioned software functional units (e.g. computer program) are stored in a storage medium and include several instructions for making a computer device (which may be a personal computer, a server, or a network device and so on) or a processor execute some steps of the method described in the embodiments of the present invention. The foregoing storage medium comprises: various media that may store program codes, such as a USB flash drive, a removable hard disk, a read-only memory (ROM), a random access memory (RAM), a magnetic disk, or an optical disk.

It shall be noted finally that the embodiments above are merely used for illustrating the technical solutions of the present invention rather than limiting same; although the present invention is described in detail with reference to the foregoing embodiments, those of ordinary skill in the art shall understand that they may still make modifications to the technical solutions stated in the foregoing various embodiments or make equivalent replacements of some technical features thereof; and these modifications or replacements shall not result in the essence of the corresponding technical solutions departing from the spirit and scope of the technical solutions of the various embodiments of the present invention.

## Claims

1. A method for processing input information, **characterized in that** it comprises:
displaying an initial search interface;
activating said initial search interface as a display area of an input keyword to display an input prompt;
receiving an input keyword input by a user according to said input prompt;
displaying said input keyword on said initial search interface; and
sending a search instruction containing said input keyword to a search engine for said search engine to perform retrieval according to said input keyword.

2. The method according to claim 1, **characterized in that** said initial search interface comprises:
an interface with all space thereof being blank; or
an interface only containing the logo of a search engine; or
an interface only containing a search function button; or
an interface only containing the logo of the search engine and the search function button.

3. The method according to claim 1, **characterized in that**, after an initial search interface is displayed, and before said initial search interface is activated as a display area of an input keyword to display an input prompt, the method further comprises:
receiving an activation instruction triggered by the user to indicate input waiting.

4. The method according to claim 1, **characterized in that** said input prompt comprises at least one of the following:
a cursor on the initial search interface;
a virtual keyboard; and
a voice input button.

5. The method according to any one of claims 1 to 4, **characterized in that** said step of sending a search instruction containing said input keyword to a search engine for said search engine to perform retrieval according to said input keyword comprises:
sending, according to a trigger instruction triggered by the user, the search instruction containing said input keyword to said search engine for said search engine to perform retrieval according to said input keyword; or
sending, according to the location change of the cursor on said initial search interface, the search instruction containing said input keyword before said cursor to said search engine for said search engine to perform retrieval according to said input keyword.

6. The method according to any one of claims 1 to 4, **characterized in that** said step of displaying an initial search interface and activating said initial search interface as a display area of an input keyword to display an input prompt comprise:
activating an initial search interface as a display area of an input keyword to display an input prompt while displaying said initial search interface; or
activating an initial search interface as a display area of an input keyword immediately after said initial search interface is displayed; or
activating, according to a preset activation rule, an initial search interface as a display area of an input keyword after said initial search interface is displayed.

7. An apparatus for processing input information, **characterized by** comprising:
a display unit for displaying an initial search interface;
said display unit also being for activating said initial search interface as a display area of an input keyword to display an input prompt;
a reception unit for receiving an input keyword input by a user according to said input prompt;
said display unit also being for displaying said input keyword on said initial search interface; and
a sending unit for sending a search instruction containing said input keyword to a search engine for said search engine to perform retrieval according to said input keyword.

8. The apparatus according to claim 7, **characterized in that** said initial search interface comprises:
an interface with all space thereof being blank; or
an interface only containing the logo of a search engine; or
an interface only containing a search function button; or
an interface only containing the logo of the search engine and the search function button.

9. The apparatus according to claim 7, **characterized in that** said reception unit is also used for
receiving an activation instruction triggered by the user to indicate input waiting.

10. The apparatus according to claim 7, **characterized in that** said input prompt comprises at least one of the following:
a cursor on said initial search interface;
a virtual keyboard; and
a voice input button.

11. The apparatus according to any one of claims 7 to 10, **characterized in that** said sending unit is specifically used for
sending, according to a trigger instruction triggered by the user, the search instruction containing said input keyword to said search engine for said search engine to perform retrieval according to said input keyword; or
sending, according to the location change of the cursor on said initial search interface, the search instruction containing said input keyword before said cursor to said search engine for said search engine to perform retrieval according to said input keyword.

12. The apparatus according to any one of claims 7 to 10, **characterized in that** said display unit is specifically used for
activating an initial search interface as a display area of an input keyword to display an input prompt while displaying said initial search interface; or
activating an initial search interface as a display area of an input keyword immediately after said initial search interface is displayed; or
activating, according to a preset activation rule, an initial search interface as a display area of an input keyword after said initial search interface is displayed.

13. A computer program configured to perform the method of any preceding method claim.
